# EUROPÄISCHE PATENTSCHRIFT

(11) **EP 0 837 797 B1**
(45) Veröffentlichungstag und Bekanntmachung des Hinweises auf die Patenterteilung: **19.01.2000**
(21) Anmeldenummer: 96923868.2
(22) Anmeldetag: 19.07.1996
(51) Int. Cl.: B60R 25/04

(54) **VORRICHTUNG ZUM SCHUTZ EINES KRAFTFAHRZEUGSTEUERGERÄTES VOR AUSTAUSCH**
DEVICE FOR PROTECTING A MOTOR VEHICLE CONTROLLER AGAINST ILLICIT EXCHANGE
DISPOSITIF POUR EVITER L'ECHANGE ILLICITE D'UN APPAREIL DE COMMANDE D'UN VEHICULE A MOTEUR

(30) Priorität: 27.07.1995 DE 19527504
(43) Veröffentlichungstag der Anmeldung: 29.04.1998
(73) Patentinhaber: ROBERT BOSCH GMBH, 70442 Stuttgart (DE)
(72) Erfinder: DENZ, Helmut, D-70176 Stuttgart (DE); HERDEN, Werner, D-70839 Gerlingen (DE)
(86) Internationale Anmeldenummer: DE9601322
(87) Internationale Veröffentlichungsnummer: WO9704997

(56) Entgegenhaltungen:
- EP-A- 0 377 128
- EP-A- 0 451 406
- DE-A- 4 317 116
- DE-U- 9 308 721
- DE-U- 29 501 043
- GB-A- 2 261 992
- US-A- 4 078 182

## Beschreibung

### Stand der Technik

Die Erfindung geht aus von einer elektronischen Wegfahrsperre für Kraftfahrzeuge, wie sie beispielsweise aus der Zeitschrift mot, Februar 1995, Seite 103 bekannt ist. Eine daraus entnehmbare Wegfahrsperre baut sich auf aus einer Zugangseinrichtung in Form eines Zündschlüssels, einem Handsender oder einer Chipkarte, einem die Wegfahrsperre beinhaltenden Steuergerät, sowie einem Motormanagementsteuergerät zur Steuerung eines Benzin- oder Dieselmotors. Mit dem Wegfahrsperrensteuergerät können weiterhin auch andere im Fahrzeug vorhandene Funktionselemente verbunden sein, wie zum Beispiel die Elektrokraftstoffpumpe oder der Starter. Voraussetzung für die Inbetriebnahme eines mit der beschriebenen Wegfahrsperre ausgerüsteten Fahrzeugs ist, daß dem Wegfahrsperrensteuergerät ein vorgeschriebener Entriegelungscode zugeführt wird. Indem das Fahrzeug aus diesem Grunde durch einen Nichtberechtigten nicht ohne weiteres in Betrieb genommen werden kann, bietet die bekannte Wegfahrsperre einen guten Schutz gegen Wegfahrdiebstähle. Mit Blick auf die zunehmende Professionalisierung von Fahrzeugdieben ist zukünftig allerdings damit zu rechnen, daß die Entwendung von Fahrzeugen erfolgt, indem das orignale, verriegelte Wegfahrsperrensteuergerät gegen ein nicht verriegeltes, ansonsten aber funktionsgleiches Ersatzsteuergerät ausgetauscht wird.

Aus der DE-A 4317116 ist eine Diebstahlschutzeinrichtung als Immobilisationseinrichtung an einem Kraftfahrzeug bekannt. Zum Zweck der Diebstahlschutzeinrichtung ist ein Stromkreis als Überwachungseinrichtung vorgesehen, an den eine Auswerteelektronik angeschlossen ist, die elektrische, unzulässige Veränderungen im Stromkreis feststellt und dann ein Bauteil, bevorzugt eine Motorkontrolleinheit, zur Immobilisation verriegelt. Bei Gewalteinwirkung auf ein Zündanlaßschloß wird eine Leiterschleife des Stromkreises an einer Sollbruchstelle vom elektrischen Schloßteil abgetrennt. Die Auswerteeinheit erkennt die unzulassige Veränderung und löst eine Verriegelung aus. Es sind keine mechanischen Vorkehrungen getroffen, dieser Leitungstrennung entgegenzuwirken.

Ausgehend von dieser Problematik ist es Aufgabe der Erfindung, eine Möglichkeit anzugeben, wie der Diebstahl von Fahrzeugen durch Austausch eines Steuergeräts verhindert werden kann.

Diese Aufgabe wird gelöst durch eine Einrichtung mit den kennzeichnenden Merkmalen des Hauptanspruchs. Der erfindungsgemäße Austauschschutz erhöht den Aufwand für den Diebstahl eines Fahrzeuges durch Austausch eines geschützten Steuergeräts erheblich. Im Falle der gewaltsamen Trennung einer erfindungsgemäß gesicherten Verbindung zwischen elektrischer Zuleitung und Steuergerät muß die elektrische Zuleitung regelmäßig mit einem neuen Anschlußelement versehen werden. Dies ist kosten- und vor allem zeitaufwendig. Für einen rechtmäßigen Benutzer erzeugt der erfindungsgemäße Austauschschutz andererseits keinen zusätzlichen Aufwand beim Ausbau eines geschützten Steuergeräts. Als vorteilhaft hat es sich erwiesen, die erfindungsgemäße Festlegung von Zuleitung und Steuergerät zueinander in der Weise auszuführen, daß auch im verbundenen Zustand eine leichte Relativbewegung möglich ist. Auf diese Weise können eventuelle Kontaktprobleme zwischen Zuleitung und Steuergerät durch leichtes Rütteln an der Verbindung beseitigt werden, ohne daß hierfür eine Entriegelung des Steuergeräts notwendig ist.

Ein Ausführungsbeispiel der Erfindung wird nachfolgend unter Bezugnahme auf die Zeichnung näher erläutert.

### Zeichnung

Es zeigen Figur 1 den Aufbau einer Wegfahrsperre, Figur 2 ein Steuergerät mit angeschlossener elektrischer Zuleitung, Figur 3 das Zusammenwirken von Kontaktfeder, Anschlußpin und Hebel mit Sicherungsstift.

### Beschreibung

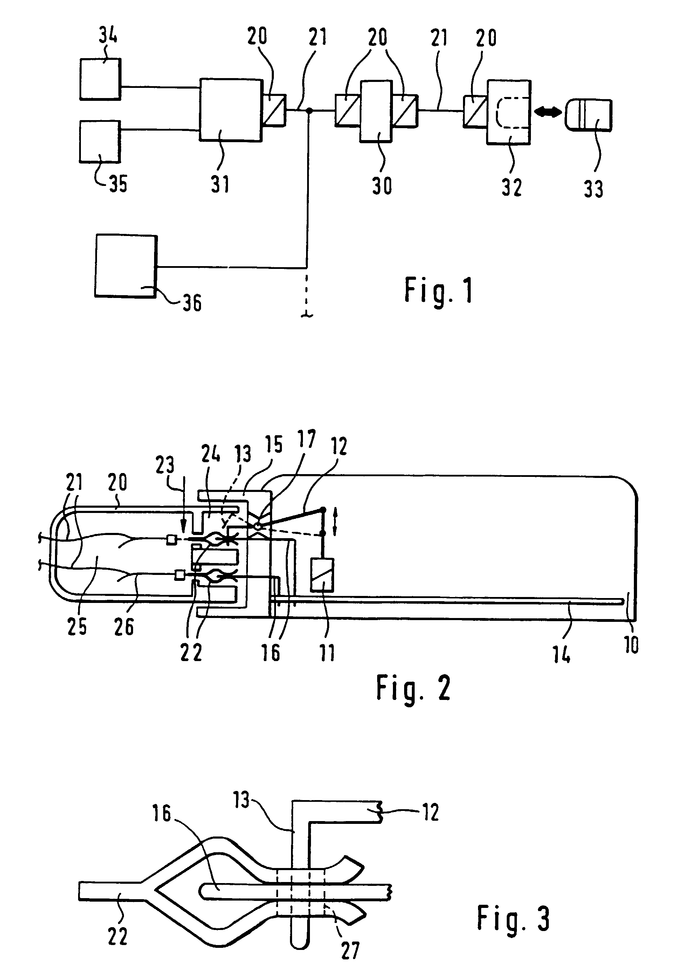

Figur 1 zeigt beispielhaft eine Wegfahrsperre für Kraftfahrzeuge, welche mit Hilfe einer Magnetkarte 33 ver- und entriegelt wird. Zum Lesen des auf der Magnetkarte 33 abgespeicherten Codes dient ein Kartenleser 32, welcher über eine elektrische Leitungsverbindung 21 mit einem Wegfahrsperrensteuergerät 30 verbunden ist. Diesem über eine weitere elektrische Leitungsverbindung 21 nachgeschaltet ist ein Motorsteuergerät 31, welches unter anderem die Zündung 34 sowie die Einspritzung 35 steuert. Mit dem Wegfahrsperrensteuergerät 30 ist desweiteren der Starter 36 sowie bedarfsweise andere im Fahrzeug vorhandene Steuergeräte verbunden. Eine Freigabe der Steuergeräte 31 und 36, und damit die Ermöglichung der Fahrzeuginbetriebnahme, erfolgt nur, wenn dem Wegfahrsperrensteuergerät 30 durch Verwendung einer autorisierten Magnetkante 33 ein korrekter Entriegelungscode zugeführt wurde. Die Verwendung einer Magnetkante des Codeträgers ist nur beispielhaft. Ohne weiteres kann stattdessen auch jedes andere bekannte Codezuführungssystem eingesetzt sein. In Betracht kommen so etwa auch die weitverbreiteten berührungslos arbeitenden Systeme. Bezüglich einer weiteren Darstellung des allgemeinen Aufbaus einer Wegfahrsperre wird auf die eingangs genannte Schrift mot von 2/95, Seiten 102 bis 106 verwiesen.

Figur 2 zeigt den Aufbau einer Verbindung zwischen einer oder mehrerer elektrischen Leitungsverbindungen 21 und einem Steuergerät 10. Letzteres kann sowohl das Wegfahrsperrensteuergerät 30, der Kartenleser 32, das Motorsteuergerät 31 oder auch der Starter 36 sein. Das Steuergerät besteht aus einem Gehäuse 10, worin eine elektronische Schaltung 14 angeordnet ist. Der Übersichtlichkeit wegen ist sie in Figur 2 nur in Form einer Platine angedeutet. An einer Seite des Gehäuses 10 befindet sich eine Anschlußaufnahme 15, in der ein oder mehrere elektrische Anschlußpins 16 angeordnet sind, die innerhalb des Gehäuses 10 auf die Schaltung 14 führen. Im Steuergerätegehäuse 10 befindet sich weiterhin ein Stellglied 11, welches mittels eines von außen zugeführten elektrischen Signals betätigbar ist. Zweckmäßig ist es als Teil der elektronischen Schaltung 14 ausgeführt. Durch das Stellglied 11 bewegt wird das eine Ende eines um eine Lagerachse 17 drehbaren Hebels 12, dessen anderes Ende außerhalb des Gehäuses 10, innerhalb der Anschlußaufnahme 15 angeordnet ist. An dem außenliegenden Ende weist der Hebel 12 einen Sicherungsstift 13 auf. Die Lagerachse 17 ist ihrerseits in einfacher Weise in der Anschlußaufnahme 15 oder im Gehäuse 10 gelagert.

In die aus der Anschlußaufnahme 15 mit darinliegenden Anschlußpins 16 sowie Hebeln 12 mit Sicherungsstiften 13 gebildete, steuergeräteseitige Verbindungseinrichtung greift paßgenau ein Anschlußelement 20, auf das alle mit der im Steuergerät angeordneten elektronischen Schaltung 14 zu verbindenden elektrischen Zuleitungen 21 geführt sind. Das Anschlußelement 20 baut sich aus einem Gehäuse auf, welches einen Innenraum 25 umschließt, worin die elektrischen Zuleitungen 21 enden. Eine Anschlußseite 24 des Gehäuses 20 ist paßgenau auf die Kontur der steuergeräteseitigen Anschlußaufnahme 15 hin ausgebildet. In der Anschlußseite 24 des Anschlußelements 20 befinden sich Ausnehmungen, worin, hinsichtlich der räumlichen Lage auf die Anschlußpins 16 auf der Steuergeräteseite abgestimmt, Kontaktfedern 22 angeordnet sind. Sie wirken bei Herstellung einer Verbindung zwischen dem Anschlußelement 20 und dem Steuergerät 10 mit den Anschlußpins 16 zusammen. Innerhalb des Hohlraums 25 sind die Kontaktfedern 22 durch Anschlußfahnen 26 fortgesetzt, auf welche jeweils in der Regel eine elektrische Zuleitung geführt ist. Zwischen Anschlußfahne 26 und innenliegendem Ende einer Kontaktfeder 22 ist im elektrischen Pfad jeweils eine Sollbruchstelle 23 ausgebildet. Realisiert sein kann sie beispielsweise durch Verringerung des Querschnitts der Anschlußfahne 26 an einer Stelle oder durch Verwendung eines spröden, leicht brüchigen Materials. Wenigstens ein Teil der Kontaktfedern 22 weist ferner im Anschlußbereich 24 einen Durchbruch 27 auf, dessen Achse im wesentlichen quer zu der Richtung liegt, entlang derer Kontaktfeder 22 und Anschlußpin 16 zusammenwirken. Der Durchbruch 27 ist so angeordnet, daß, wenn Anschlußelement 20 und Steuergerät 10 eine vorbestimmte Lage zueinander einnehmen, der Hebel 12 mit dem Sicherungsstift 13 an seiner Spitze in den Durchbruch 27 geschwenkt werden kann.

Zweckmäßig hat der Durchbruch 27 eine Langlochform entlang der Wirkungsrichtung der Verbindung zwischen Anschlußelement 20 und Steuergerät 10. Letztere können dadurch auch dann geringfügig zueinander bewegt werden, wenn sich der Hebel 12 mit dem Sicherungsstift 13 im Eingriff in den Durchbruch 27 befindet. Hierdurch kann bei fehlendem elektrischen Kontakt zwischen einem Federkontakt 22 und einem Anschlußpin 16 zunächst durch leichtes Rütteln an der Verbindung am Anschlußelement 20 Steuergerät 10 versucht werden, einen Kontakt wiederherzustellen.

Die vorbeschriebene Anordnung wird wie folgt eingesetzt. Jeweils mit der Beendigung eines Fahrbetriebs, der nach vorhergehender autorisierter Inbetriebnahme erfolgte, ergeht von dem Kartenleser 32 oder dem Wegfahrsperrensteuergerät 30 ein Signal, welches das Stellglied 11 dazu veranlaßt, den Hebel 12 mit dem Sicherungsstift 13 in den Durchbruch 27 in der Kontaktfeder 22 beziehungsweise dem Anschlußpin 16 einzuschwenken. Das Zusammenwirken von Sicherungsstift 13, Hebel 12 und Kontaktfedern ist in Figur 3 veranschaulicht. Wird in diesem Zustand eine gewaltsame Trennung von Anschlußelement 20 und Steuergerät 10 vorgenommen, bricht die Sollbruchstelle 23 im Anschlußelement 20, wodurch die Kontaktfedern 22 aus der Lagerung im Anschlußelement 20 gerissen und die zugehörige Leitungsverbindung 21 unterbrochen wird. Ein anderes Steuergerät ist über das solchermaßen beschädigte Anschlußelement 20 nicht mehr an das Fahrzeug anschließbar.

Soll hingegen der Ausbau oder der Austausch einer Steuergeräts mit Zustimmung des rechtmäßigen Eigentümers erfolgen, etwa nach einem Defekt oder im Rahmen eines Werkstattaufenthaltes, ist hierfür dem betreffenden Steuergerät ein vorgegebenes Entriegelungscodesignal zuzuführen. Dieses Codesignal kann nur von einem rechtmäßigen Benutzer erzeugt werden, der im Besitz der richtigen Magnetkarte 33 ist. Die Erzeugung des Codes kann dabei auf verschiedene Art erfolgen, in einfacher Weise befindet sich der Code beispielsweise bereits auf der Magnetkarte 33 und kann mit einem zusätzlichen, geeigneten Kartenleser ausgelesen werden. Aufgrund des Codesignals schwenkt das Stellglied 11 auch im stillgesetzten Zustand den Hebel 12 mit dem Sicherungsstift 13 aus dem Durchbruch 27 beziehungsweise bewirkt, daß der Hebel gar nicht erst in den Durchbruch hineinschwenkt, woraufhin ein zerstörungsfreies Trennen des Anschlußelements 20 vom Steuergerät 10 möglich ist.

Unter Beibehaltung des grundlegenden Gedankens, die Verbindung zwischen dem Anschlußelement einer elektrischen Zuleitung und einem Steuergerät mit Hilfe einer quer zur Verbindungsrichtung wirkenden mechanischen Sperre zu fixieren, welche zerstörungsfrei nur mit Hilfe eines Codesignals betätigbar ist, ist eine Vielzahl von Ausgestaltungen der in den Figuren 2 und 2 prinzipiell vorgestellten Anordnung denkbar. Dies gilt beispielsweise für Art und Anordnung des Stellglieds 11, Ausbildung des Hebels 12 mit dem Sicherungsstift 13, Art und Ausbildung der Sollbruchstelle 23 oder Anzahl der Sperreinrichtungen. Auch sind vertauschbare Funktionalitäten denkbar, wobei das Stellglied im Anschlußelement 20, die Sollbruchstelle 23 im Steuergerät 10 angeordnet ist.

Ferner ist denkbar, anstelle einer mechanischen Sicherung mit Hilfe des Sicherungsstiftes 13 eine elektrische vorzusehen. Beispielsweise können im Steuergerät 10 ein Leistungsschalter sowie eine Batterie zu dessen Stromversorgung, im Anschlußelement 20 eine Schmelzsicherung vorgesehen sein. Wird von einem Nichtautorisierten der Versuch einer gewaltsamen Trennung der Verbindung zwischen Anschlußelement und Steuergerät 10 unternommen, speist der Leistungsschalter einen hohen Strom in eine der Leitungsverbindungen 16, 21 im Anschlußelement ein, welcher dort zur Zerstörung der Schmelzsicherung führt. Daneben kann vorgesehen sein, daß der vom Leistungsschalter am Steuergerät 10 eingespeiste hohe Strom zur Zerstörung des über die betreffende Leitungsverbindung 16, 21 versorgten Aggregates, wie zum Beispiel einem Drehzahlgeber, führt.

## Patentansprüche

1. Vorrichtung zum Schutz eines in einem Kraftfahrzeug vorhandenen Steuergerätes (10) vor Austausch durch einen Nichtberechtigen, mit einer auf eine Verbindung zwischen dem Steuergerät (10) und dem Ansschußelement (20) einer elektrischen Zuleitung (21) wirkenden, das Trennen der Verbindung hemmenden Sicherungseinrichtung (11, 12, 13, 27), welche das Steuergerät (10) und das Anschlußelement (20) auf Einhalten einer vorbestimmten Verbindungslage zueinander festgelegt.

2. Vorrichtung nach Anspruch 1, dadurch gekennzeichnet, daß Anschlußelement (20) und Steuergerät (10) nur nach Zuführung eines Entriegelungscodes an das Steuergerät (10) zerstörungsfrei trennbar sind.

3. Vorrichtung nach Anspruch 2, dadurch gekennzeichnet, daß die Sicherangseinrichtung (11, 12, 13, 27) in der ihr zugeordneten Verbindung eine nichtreversible Unterbrechung der elektrischen Leitungsverbindung (21, 16) herbeiführt, wenn Anschlußelement (20) und Steuergerät (10) ohne vorhergehende Zuführung eines Entriegelungscodes voneinander getrennt werden.

4. Vorrichtung nach Anspruch 1, dadurch gekennzeichnet, daß die Sicherangseinrichtung (11, 12, 13, 27) elektrisch betätigbar ist.

5. Vorrichtung nach Anspruch 1, dadurch gekennzeichnet, daß die Sicherangseinrichtung (11, 12, 13, 27) quer zur Verbindungsrichtung von Anschlußelement (20) und Steuergerät (10) wirkende mechanische Sicherungsmittel (13) aufweist.

6. Vorrichtung nach Anspruch 1, dadurch gekennzeichnet, daß die Sicherangseinrichtung (11, 12, 13, 27) eine leichte Relativbewegung von Anschlußelement (20) und Steuergerät (10) zueinander zuläßt.

7. Vorrichtung nach Anspruch 3, dadurch gekennzeichnet, daß die Sicherangseinrichtung (11, 12, 13, 27) eine in der Leitungsverbindung (21, 16) angeordnete Schmelzsicherung umfaßt, die im Falle einer Trennung ohne Zuführung eines Entriegelungscodes durch einen im Steuergerät (10) erzeugten großen Strom zerstört wird.

8. Vorrichtung nach Anspruch 1, dadurch gekennzeichnet, daß die Sicherangseinrichtung (11, 12, 13, 27) eine elektrische Geberschaltung aufweist, welche bei Erreichen einer vorbestimmten Verbindungslage ein Quittungssignal erzeugt.

## Claims

1. Apparatus for protecting a controller (10) which is fitted in a motor vehicle against replacement by an unauthorized person, having a protection device (11, 12, 13, 27) which acts on a connection between the controller (10) and the connecting element (20) of an electrical supply lead (21), prevents the disconnection of the connection and fixes the controller (10) and the connecting element (20) in order to maintain a predetermined connection position with respect to one another.

2. Apparatus according to Claim 1, characterized in that the connecting element (20) and the controller (10) can be disconnected without destruction only after supplying an unlocking code to the controller (10).

3. Apparatus according to Claim 2, characterized in that the protection device (11, 12, 13, 27) causes a non-reversible interruption in the electrical lead connection (21, 16) in the connection associated with it, if the connecting element (20) and the controller (10) are disconnected from one another without previously supplying an unlocking code.

4. Apparatus according to Claim 1, characterized in that the protection device (11, 12, 13, 27) can be operated electrically.

5. Apparatus according to Claim 1, characterized in that the protection device (11, 12, 13, 27) has mechanical protection means (13) which act transversely with respect to the connection direction of the connecting element (20) and the controller (10).

6. Apparatus according to Claim 1, characterized in that the protection device (11, 12, 13, 27) allows slight relative movement of the connecting element (20) and controller (10) with respect to one another.

7. Apparatus according to Claim 3, characterized in that the protection device (11, 12, 13, 27) comprises a fuse link which is arranged in the lead connection (21, 16) and, in the event of disconnection without supplying an unlocking code, is destroyed by a high current produced in the controller (10).

8. Apparatus according to Claim 1, characterized in that the protection device (11, 12, 13, 27) has an electrical transmitter circuit, which produces an acknowledgement signal on reaching a predetermined connection position.

## Revendications

1. Dispositif servant à protéger un appareil de commande (10) se trouvant dans un véhicule à moteur, contre un échange opéré par une personne non autorisée,
caractérisé en ce qu'
il comprend un système de sécurité (11, 12, 13, 27) agissant sur une liaison entre l'appareil de commande (10) et l'élément de raccordement (20) d'une ligne d'alimentation électrique (21), et empêchant la coupure de la liaison, qui oblige l'appareil de commande (10) et l'élément de raccordement (20) à conserver une position de liaison prédéterminée.

2. Dispositif selon la revendication 1,
caractérisé en ce que
l'élément de raccordement (20) et l'appareil de commande (10) ne peuvent être séparés sans destruction qu'après l'envoi d'un code de déverrouillage à l'appareil de commande (10)

3. Dispositif selon la revendication 2,
caractérisé en ce que
le système de sécurité (11, 12, 13, 27) provoque dans la liaison qui lui est associée, une coupure irréversible de la ligne de liaison électrique (21, 16) quand l'élément de raccordement (20) et l'appareil de commande (10) sont séparés l'un de l'autre sans l'envoi au préalable d'un code de déverrouillage.

4. Dispositif selon la revendication 1,
caractérisé en ce que
le système de sécurité (11, 12, 13, 27) peut être actionné électriquement.

5. Dispositif selon la revendication 1,
caractérisé en ce que
le système de sécurité (11, 12, 13, 27) présente des moyens mécaniques de blocage (13) qui agissent perpendiculairement au sens de la liaison entre l'élément de raccordement (20) et l'appareil de commande (10).

6. Dispositif selon la revendication 1,
caractérisé en ce que
le système de sécurité (11, 12, 13, 27) permet d'avoir un léger mouvement relatif de l'élément de raccordement (20) et de l'appareil de commande (10) l'un par rapport à l'autre.

7. Dispositif selon la revendication 3,
caractérisé en ce que
le système de sécurité (11, 12, 13, 27) comprend un fusible qui est disposé dans la ligne de liaison (21, 16) et qui est détruit par une intensité élevée produite dans l'appareil de commande (10) dans le cas d'une coupure sans l'envoi d'un code de déverrouillage.

8. Dispositif selon la revendication 1,
caractérisé en ce que
le système de sécurité (11, 12, 13, 27) présente un circuit électrique de capteur qui produit un signal d'accusé de réception lorsqu'une position de liaison prédéterminée a été atteinte.
